# EUROPEAN PATENT SPECIFICATION

(11) **EP 1 577 769 B1**
(45) Date of publication and mention of the grant of the patent: **15.08.2007**
(21) Application number: 05397007.5
(22) Date of filing: 04.03.2005
(51) Int. Cl.: G06F 9/46

(54) **Method and system for centralized copy/paste functionality**
Verfahren und System für zentralisierte Kopieren/Einfügen-Funktionalität
Méthode et système de fonctionnalité de copier/coller centralisée

(30) Priority: 18.03.2004 US 805678
(43) Date of publication of application: 21.09.2005
(73) Proprietor: Nokia Corporation, 02150 Espoo (FI)
(72) Inventor: Ketola, Pekka, 33720, Tampere (FI); Mantere, Jussi, 02330, Espoo (FI); Karttunen, Juha, 02650, Helsinki (FI)
(74) Representative: Rönkkö, Taina Mirjam

(56) References cited:
- EP-A- 0 886 413
- EP-A- 1 168 148
- US-A1- 2002 143 985

## Description

### Field of the Invention

The current invention relates to personal computing and particularly to a data transfer, i.e. copy-paste functionality, between applications.

### Background of the Invention

In personal computing, the basic operation of copy-paste and cut-paste functionalities have been quite unchanged for a couple of decades. These functionalities have been utilized especially in graphical user interfaces, but also in certain text-based interfaces. They are very useful tools in applications for they operate as a data transfer method between locations within one application program or between different application programs.

Copy-paste and cut-paste functionalities can be implemented variously. The basic operation, which is known from Microsoft Windows^{®} environment follows steps, wherein part of a text, an image or a similar item is chosen and "copied" or "cut". Due to the copy/cut operation, the chosen item is saved into a temporal memory, wherefrom that item may be transferred into new location by a paste operation. The main difference between copy and cut functionality is that whereas cut command deletes the item from the source application, the copy command leaves it at its original place. Above-mentioned steps can be carried out with, for example, a key combination, wherein "arrow" and "shift" keys are usually used for selecting items, and for copy operation "control" and "c" and for cut operation "control" and "x" keys are pressed together. A target application program can be chosen by holding "alt" key down and selecting the application program with a tabulator and activating it by releasing the "alt" key. When the target application program is activated the user needs to choose a place where the item is pasted. After this the item can be pasted in both operations by pressing "control" and V keys together.

Copy/cut-pasting can also be done with a mouse, with which the user can select the area or the item to be transferred into other location. The wanted word or paragraph is "painted" (selected, highlighted) or the wanted item is activated after which the user can select the "copy" or "cut" operation from a menu (from the application program or from the menu of the mouse), wherein the item is saved into the temporal memory. After the user has selected a location where the item is to be transferred, the user further chooses the "paste" function from the menu, after which the item is transferred to desired location. In some computing systems data transfer can also be done by "drag and drop" operation, which functionality varies depending on the application programs. If the source and target applications belongs to same application family (e.g. Microsoft Office) the drag-and-drop "cuts" the item out, if not it transfers a copy of the selected item (and leaves the original) or presents a menu where the pasting by copy-function or pasting by cut-function can be selected. In addition the drag-and-drop operation is more usable if both the source application program as well as the target application program are in the view of the user.

In some application programs a tool called a clipboard tool can be utilized for storing copied items and accessing them for selecting and pasting purposes. After one or several copy-commands, the user can enter the clipboard tool and choose one item or all to be pasted. Only the first or all the items can be pasted depending on the chosen command "paste" or "paste all". In addition, the items can be deleted from the clipboard tool if they are not needed. The clipboard tool is usually shared only between a few program applications.

As said, copy pasting of these kinds are utilized when the copied item is part of a text, part of an image or a whole image or a file. Generally the source application and the target application support each other's media types. In some cases the target application can also convert the media type of the source application to the supported media type (e.g. when pasting text content into image editing program the text is converted to image). If the target application program does not know how to handle the pasted item from the source application program, the item can be shown as an icon of said source application program. The target application in responsible for determining what to do with the item being pasted. E.g., if a text application program cannot handle images, the image may not pasted at all even if it contained text. Similarly, if the copied item contains formatted text, such as Rich Text format, the formats will be removed before pasting the text to e.g. a plain text document.

Above-mentioned implementations are mainly utilized in personal computers. The evolution of mobile computing brings new functionalities and new application programs also to mobile devices. Hence, the need for sharing information between those applications increases.

In some advanced mobile devices similar copy-paste functionality can be found, which allows the user to select (with a stylus or keys) parts of the text in certain application program, copy it into memory and afterwards paste it elsewhere. Certain advanced devices, like applicants Series 60^{™} type, comprise one kind of a clipboard tool, which can be utilized for copy-pasting. But also this tool can only be utilized between only some application. The basic copy-paste methods are addressed basically to weft-defined item types, such as text, image, URL or a file as a whole or partially.

As can be noticed from the description above, current advanced devices do not have an explicit way to transfer data between locations and between application programs by utilizing a clipboard tool. The clipboard tool can be utilized only in certain application programs and for certain type of contents, such as textual and images.

Publication EP-A-0 886 413 discloses a solution which is primarily targeted to data transfer between applications. Publication describes a copy process that is performed by the user. When data is copied, the system of the publication is arranged to analyse what kind of content the data comprises and for which application that kind of content can be offered for pasting purposes. After the content has been analysed the user is offered only the data suitable to be pasted for an application in question.

Publication US 2002/143985 A1 discloses a copy-paste functionality between two or more computing systems e.g. via a common computer network. The solution comprises a switch-box that is utilized in the copy process. When the user copies data by using predefined keystrokes such as ctrl-c, the system is arranged to measure time between single keystrokes ctrl and c and to determine the actual pasting target based on that time.

Publication EP-A-1 168 148 discloses a portable information terminal. The terminal comprises a copy part for copying an image of the selected object to display the copied image in floating on the display panel and a pasting part for pasting the selected object displayed in a floating manner onto another application window.

Thus, what is needed is an improved method for transferring data from one location into another, that is an improved method for copy-paste-functionality especially in mobile devices. This invention addresses such a need.

### Summary of the Invention

This invention relates to an automatic trace-paste method in personal computing devices, especially mobile computing devices.

The aim of the current invention is to provide easier and more usable copy-paste function e.g. for computing devices, wherein user inputs can be reduced. The copy-pasting according to the invention is automatic, but it is also made possible to operate manually.

Another aim of the current invention is to make copy-paste function available for all relevant media types, wherein the functionality is not limited only to some as in related art.

Yet another aim of the current invention is to provide a tool, which gathers the copied items into one place independently of their media types, where they can further be selected and pasted from.

For doing this, the method according to the invention comprises steps for tracing the latest operation relating to the source application, extracting at least one item from said operation, recording said item into a file, wherein said file is called by the target application for selecting and pasting the item to said target application. In other words one kind of a log file is upheld according to the invention, where the operations are stored sequentially. Information of this trace log is used similar to the clipboard-metaphor. For better usability of said file, the operations are divided depending on their media types. The device for computing comprise a source application and a target application and tracing means for tracing the latest operation relating to the source application automatically right after said operation has occurred, extracting means for extracting at least one item from said operation, and a file for storing said item, said file is arranged to receive an access command from the target application and to present items from the file. The system according to the invention is configured to trace the latest operation relating to the source application automatically right after said operation has occurred, to extract at least one item from said operation, to record said item into a file, and to call said file by the target application for selecting and pasting the item to said target application. A computer program product comprises instructions for tracing the latest operation relating to one applications automatically right after said operation has occurred, extracting at least one item from said operation, recording said item into a file, said file being called by another application for selecting the item to be pasted.

According to the invention, items of the latest operation - being performed by the device with or without the user action - are automatically stored into the trace log. Items can then be used in any relevant application program. Some examples of such operation is a phone call where a phone number can be an item; a camera shot, where an image can be an item; a site downloaded from the network, where the site and its URL can be items. These operations are naturally just examples; a man skilled in the art will become aware the other possibilities of the invention,

Due to the automatic storing the user is freed from inputting commands for copying these operations. However, it is still possible to copy items manually into the trace log of the invention.

Thanks to the invention, the last operation data is nearly always available (sometimes e.g. large processes as well as low memory can cause lacking). In addition, the last operations are available in different categories. The user has access to recent information like recent message content, recent URL, recent contact information, the highest score etc. which all locate centralized in the same place.

Another advantage of the invention is the possibility to share any kind of data between applications, programs and even between users. Due to the automatic operation and reduced copy-paste-actions the efficiency of the users increases.

The method provides also an effective way for composing a MMS-message (Multimedia Messaging Service) from the latest operations of the user. This kind of message composing requires very few user inputs. The user can easily, for example, transfer the latest image downloaded from the internet into the message without manual saving of the item. It should be noticed that, thanks to the invention, the media type of the transferred data can be different from the ones the target application program can handle.

Because the solution of the invention is not dependent of media types, the invention can be applied to any existent or upcoming media types.

### Brief Description of the Drawings

A better understanding of the invention may be obtained from the following considerations taken in conjunction with accompanying drawings, which are not meant to restrict the scope of the invention in any way.
- Figure 1a-b: illustrate examples of a device utilizing the invention,
- Figure 2: illustrates an embodiment of the method according to the invention for saving an operation,
- Figure 3: illustrates an embodiment of the method according to the invention for pasting the operation
- Figure 4a-4b: illustrate in a very simplified manner examples of a views of the tracing application program, and
- Figure 5: illustrates a relationship of the source application, tracing application and the target application.

### Detailed Description of the Invention

Before the detailed description of the invention, the applicant wishes to define few terms which are used in the description. "An operation" means in the description something operating and operable in a computing device. Operation can be receiving an email / a call / a message, downloading an item from the network, photographing, marking calendar etc. - in other words, any action that is happening in the device by the user or by the device. "An item" refers to the operation and is the determinant part of the operation that can be copied / transferred . The item can be a content of the operation or a property of the operation. If the operation is an incoming call, then the item can be a contact information such as a phone number, or a contact card. On the other hand, if the operation is an incoming multimedia message, then items can be message content components (text, image etc.) or contact information. A term "media type" does not necessarily - but can - mean the well-known MIME-types. Media type, which is discussed in more detailed afterwards, defines category for the operation in general. "Transfer function" refers to the method according to the invention which resembles the known copy-paste function. Transfer function comprises at least the steps for copying (tracing, recording) and pasting. "An application" refers here to a location where the item is and, then again, where the item is transferred. An application locates within "an application program." The method according to the invention can be implemented between applications in same or in different application programs. Also, what should be noticed, that in certain situations the application can be arranged to save the item to the memory means of the device, whereupon the specific application program need not to launched.

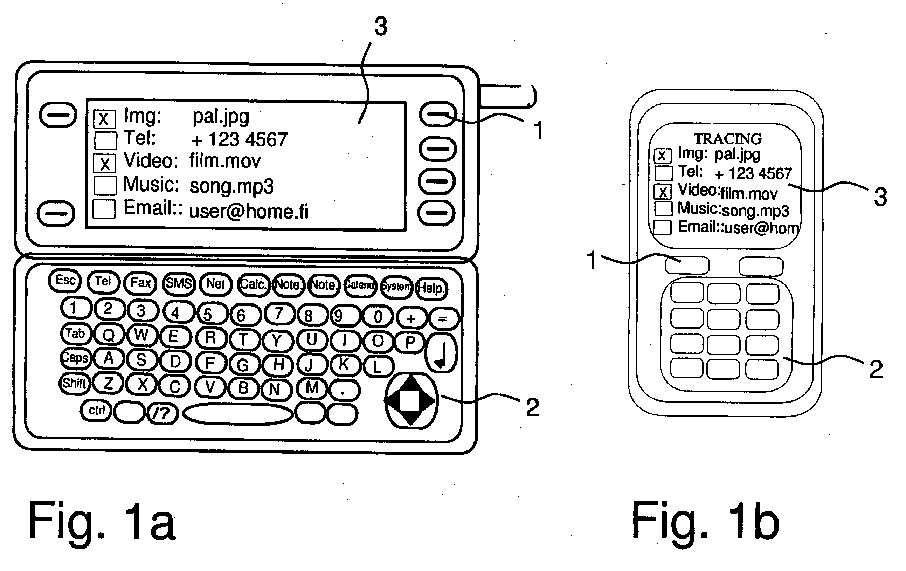

The method according to the invention is mainly addressed to portable devices (see figures 1a and 1b) such as mobile phones, smart phones, PDA devices and similar advanced terminals. Devices comprising a Series 60^{™} type of user interface (provided by the applicant) can be used as examples. However, after reading this description it will become evident to the reader that this invention is not solely limited to said devices, but can be utilized in any computing environment dealing with similar functionalities, e.g. in personal computers. But as said, the greatest need for the invention can be found in such portable devices which usually have relatively low memory and limited processing capability. In addition, such devices usually have limited number of input keys 2 as well as a relatively small display 3. Because of those features, such devices need new methods for different tasks for the sake of a good usability.

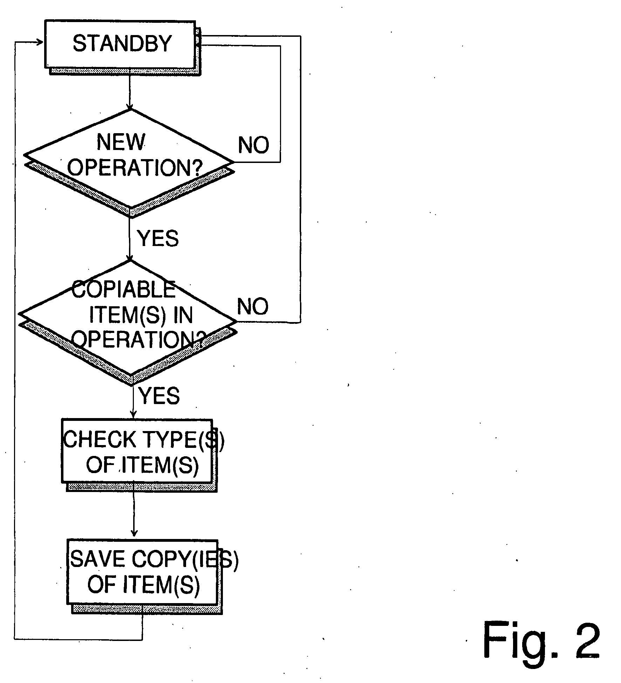

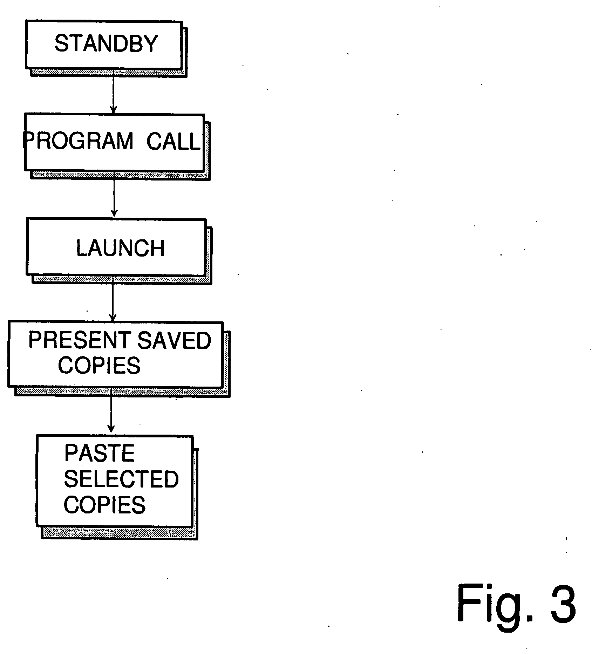

The method according to the invention can be carried out by an independent software application program, which is further referred by a term "tracing application". This tracing application is an advanced and centralized trace log which stores a record of an item of the last operation done by the user with the device or by the device itself. The operation can be a single operation or a set of operations resulting from certain macro or script. It should be also noticed, that the user can bind two or more operations together, and used it for the copiable operation. The copy can be afterwards used in some other situation, e.g. in different application programs or in a different location. The method works automatically meaning that after the operation (phone call, messaging, imaging, etc.) the operation item (e.g. phone number, message content, an image) is saved into the tracing application. An example of automatic saving is presented in a flowchart in figure 2. In addition an example of pasting operation is presented in a flowchart in figure 3.

The tracing application can also be used semi-automatically or manually with a certain function key 1, e.g., an edit key (see figures 1 a - 1b). The user can choose text areas or single items and copy them into the tracing application. The tracing application comprises the item itself, but for the sake of less memory consumption the tracing application can comprise a link to said item. By pressing and holding the function key 1 down, a cursor is provided to the user with which the user can move in the source application program. When the cursor is moved above the item, the item is activated or when the cursor is moved above a text, the text area can be highlighted. The copying to the tracing application can then be done by some other function key. This process resembles the copying methods according to related art, but it should be kept in mind, that all the copied items, irrespective of their media types, are collected to the same log file.

It should be noticed that for preventing overwriting of items due to the automatic storing and manual copying, the tracing application can also have its own class for manually copied items. If several items of different media types (e.g. video, image, text) are "painted", the class for manually copied items can be divided for those types.

If in any case the copying cannot be performed, the copied item can be pasted in a known way.

The tracing application according to the invention is launched separately or by a function call performed by another application program. The call can be substantially any kind of access command, e.g. a key combination or a menu selection (e.g. a paste). The calling application program can be located within the same device as the tracing application or in a different device. In case the application programs are located in different devices, the function call can be delivered via a communication network. The selection between an application related storage file (such as image gallery) and the tracing application according to the invention can be done e.g. by opening the tracing application by command "paste" and opening the application related storage file (e.g. image gallery) by command "insert" (e.g. insert image).

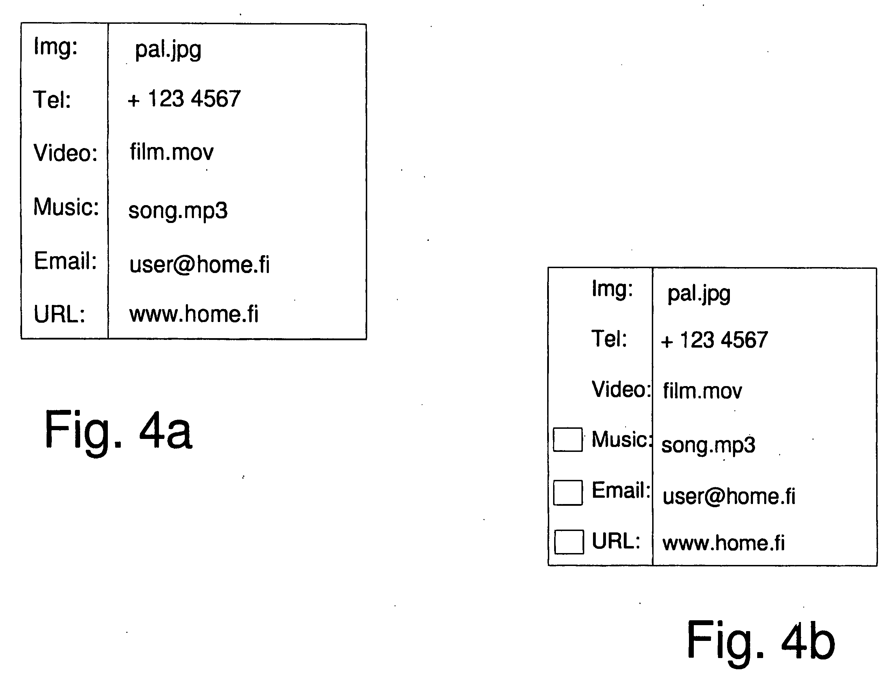

After launching the tracing application, a list comprising the saved items (operations) is presented to the user. The copied items can be viewed or deleted or selected to be transferred, edited, sent etc. from the list to be accessed by the target application. The operation items can be shown to the user as icons or as text or as a mixture of them (figure 4a). For example for composing a message one or many items can be selected from the list and attached to the message application program. For choosing several items, e.g. a check-box-feature can be utilized (see figure 4b). This feature is advantageous e.g. in multimedia messaging where several multimedia items can be easily chosen from one list.

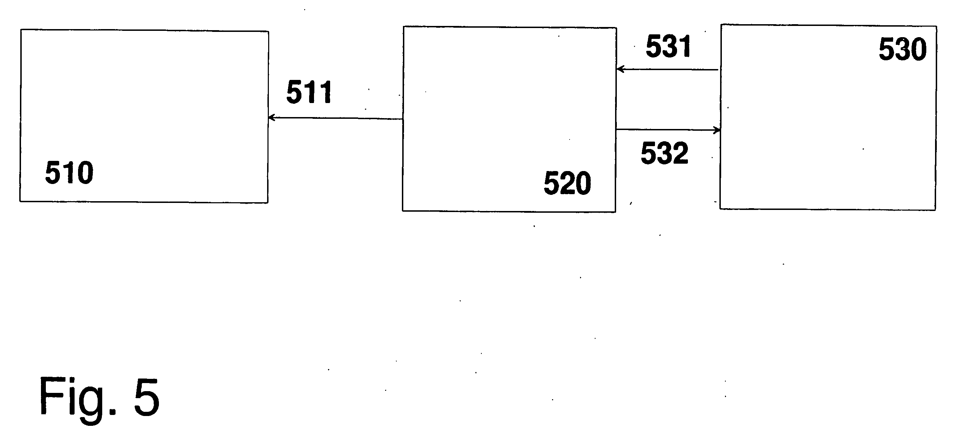

One example of the invention is presented in figure 5, where the relationships of the application programs are shown. When an operation is detected an item is traced 511 from the source application program 510 by the tracing application program 520. If the item is desired to be pasted, it is acquired from the tracing application program 520 by a function call 531 from the target application 530 or by launching the tracing application program 520 separately. In both cases the item is transferred (pasted) 532 into the target application.

The solution according to the invention is independent on application program types. Hence, the source and target application programs can be different, e.g. belong to different program families or supporting different media types. In addition, the source and target application program can locate in different devices. The pasting between devices can be implemented in different ways. For example, the whole trace log file can be transferred to the other device or shared with the other device. Saved items can also be transferred individually to the application program of the other device, or to the trace log file of the tracing application program of the other device. After this the user of the other device can take the item and paste it elsewhere in the device.

As mentioned earlier, the tracing application is not limited to media types. Table 1 presents a few examples of the media types that are handled by the invention.

**TABLE 1: Media types supported by the invention**

| **Media types** | **Appearing in** |
|---|---|
| Text | |
| | Message text |
| | Note pad |
| | Text from a web site |

| Image | |
|---|---|
| | Image gallery |
| | Camera |
| | Camera shot |

| Video | |
|---|---|
| | Video gallery |
| | Streaming |

| Audio | |
|---|---|
| | Voice recorder |
| | Voice identifier |

| URL | |
|---|---|
| | WAP |
| | WWW |
| | Streaming |

| Phonebook entry | |
|---|---|
| | Phone number |
| | Email-address |
| | Fax number |
| | Contact card |

| Music | |
|---|---|
| | File |
| | Play list |
| | Radio channel |

| calendar event | |
|---|---|
| | Calendar |
| Wallet | |
| error messages | |

The next table 2 presents examples of operations that can be traced from different functionalities.

**TABLE 2: Functionalities and traced operations**

| **Functionalities** | **Traced operations** |
|---|---|
| Messaging | Incoming - outgoing - viewing - SRRF -IR |
| Calling | Received - dialled - missed |
| Imaging | Screen capture - photographing - SRRF |
| Browsing | |
| Using application programs | Calendar event - contact information - music |
| Selecting | Copy |

In summary, operations that relate to receiving, sending, downloading, creating or deleting can at least be recorded. For example items can be received through short range radio frequency (SSRF, e.g. Bluetooth^{™}) and traced by the tracing application. The tracing application can also be launched by a trigger from a protocol, e.g. OBEX (OBject Exchange). When looking the examples presented in the tables above, it should be kept in mind, that the examples are not the only copiable operations. This is important, because the idea of the log file is that it can be set to store any operation or process happening in the device. And due to this feature, this invention can be applied in current application programs of the device but also in future application programs.

When viewing the tracing application the user can select one or many items being the whole or partial data e.g. of a message, a web form, contacts, personal information manager (PIM) being pasted or inserted to a certain target. As an example of the contact information the "whole data" can be the contact card and the partial data can be part of information, e.g. a name or a phone number.

The main idea of the invention can be utilized in various different environments where copy-paste-function is needed. The use of the tracing application is optional with other known methods. The foregoing detailed description is provided for clarity of understanding only, and the details are not necessarily limitations with respect to the claims herein.

## Claims

1. A method for transferring data from a source application (510) to a target application (530), the method comprising steps for
- tracing the latest operation relating to the source application (510) automatically right after said operation has occurred,
- extracting at least one item from said operation,
- recording said item into a file,
- wherein said file is called by the target application (530) for selecting and pasting the item to said target application (530).

2. The method according to claim 1, wherein the item is selected from the file by means of a clipboard.

3. The method according to claim 1, wherein more than one operations are traced and recorded.

4. The method according to claim 1, wherein the file is a log file.

5. The method according to claim 1, wherein at least one of the following operations: handling, receiving, sending, downloading, creating, deleting, is traced.

6. The method according to claim 1, wherein said item is a content of the operation or a property of the operation.

7. The method according to claim 1, wherein the source application (510) and the target application (530) are located within one application program.

8. The method according to claim 1, wherein the source application (510) and the target application (530) are located in different application programs.

9. The method according to claim 1, wherein the source application (510) and the target application (530) are located in different devices.

10. The method according to claim 1, wherein said file is shared between application programs of a computing device.

11. The method according to claim 1, wherein a type of the item is identified.

12. The method according to claim 11, wherein said type belongs to one of the following groups: image, audio, video, text, URL, phonebook entry, music, calendar event, wallet and error message.

13. The method according to claim 11, wherein said type is used for classifying the item.

14. A device for computing, said device comprising a source application (510), a target application (530) and
- tracing means (520) for tracing the latest operation relating to the source application (510) automatically right after said operation has occurred,
- extracting means for extracting at least one item from said operation,
- a file for storing said item,
- said file is arranged to receive an access command from the target application (530) and to present items from the file.

15. The device according to claim 14, wherein one or many item from the file is selected to be accessed by the target application (530).

16. The device according to claim 14, wherein the file is a log file.

17. The device according to claim 14 comprising also means for at least one of the following operations: messaging, calling, imaging, browsing, using application programs and selecting.

18. The device according to claim 14, wherein said extracting means are configured to extract the item from a content of the operation or from a property of the operation.

19. The device according to claim 14, wherein the source application (510) and the target application (530) are located within one application program.

20. The device according to claim 14, wherein the source application (510) and the target application (530) are located in different application programs.

21. The device according to claim 14, comprising means for exchanging data with another device.

22. The device according to claim 14, further comprising means for identifying a type of the item.

23. The device according to claim 22, further comprising means for classifying the item based on the its type.

24. The device according to claim 14, wherein said operation is implemented without user action.

25. The device according to claim 14, further comprising means for manual copying.

26. The device according to claim 15, further comprising means for mobile communication.

27. A system for implementing the method of claim 1.

28. A computer program product, comprising memory means and a computer program comprising instructions for
- tracing the latest operation relating to one application(510) automatically right after said operation has occurred,
- extracting at least one item from said operation,
- recording said item into a file,
- said file being called by another application (530) for selecting the item to be pasted.

## Patentansprüche

1. Verfahren zum Übertragen von Daten von einer Quellanwendung (510) auf eine Zielanwendung (530), wobei das Verfahren Folgende Schritte umfasst:
- automatisches Verfolgen des letzten Vorgangs in Bezug auf die Quellanwendung (510), unmittelbar, nachdem der Vorgang stattgefunden hat,
- Extrahieren wenigstens eines Objekts aus dem Vorgang,
- Aufzeichnen des Objekts in einer Datei,
- wobei die Datei von der Zielanwendung (530) aufgerufen wird, um das Objekt auszuwählen und in die Zielanwendung (530) einzufügen.

2. Verfahren nach Anspruch 1, wobei das Objekt mit Hilfe einer Zwischenablage aus der Datei ausgewählt wird.

3. Verfahren nach Anspruch 1, wobei mehr als ein Vorgang verfolgt und aufgezeichnet wird.

4. Verfahren nach Anspruch 1, wobei die Datei eine Protokolldatei ist.

5. Verfahren nach Anspruch 1, wobei wenigstens einer der folgenden Vorgänge: Bearbeiten, Empfangen, Senden, Laden, Erstellen, Löschen, verfolgt wird.

6. Verfahren nach Anspruch 1, wobei das Objekt ein Inhalt des Vorgangs oder eine Eigenschaft des Vorgangs ist.

7. Verfahren nach Anspruch 1, wobei die Quellanwendung (510) und die Zielanwendung (530) innerhalb eines Anwendungsprogramms angeordnet sind.

8. Verfahren nach Anspruch 1, wobei die Quellanwendung (510) und die Zielanwendung (530) innerhalb unterschiedlicher Anwendungsprogramme angeordnet sind.

9. Verfahren nach Anspruch 1, wobei die Quellanwendung (510) und die Zielanwendung (530) innerhalb unterschiedlicher Vorrichtungen angeordnet sind.

10. Verfahren nach Anspruch 1, wobei die Datei von Anwendungsprogrammen einer Rechenvorrichtung gemeinsam genutzt wird.

11. Verfahren nach Anspruch 1, wobei ein Typ des Objekts identifiziert wird.

12. Verfahren nach Anspruch 11, wobei der Typ zu einer der folgenden Gruppen gehört: Bild, Ton, Video, Text, URL, Telefonbucheintrag, Musik, Kalenderereignis, Brieftasche oder Fehlermeldung.

13. Verfahren nach Anspruch 11, wobei der Typ zum Klassifizieren des Objekts benutzt wird.

14. Rechenvorrichtung, wobei die Vorrichtung umfasst:
eine Quellanwendung (510), eine Zielanwendung (530), und
- Verfolgungsmittel (530) zum automatischen Verfolgen des letzten Vorgangs in Bezug auf die Quellenanwendung (510), unmittelbar, nachdem der Vorgang stattgefunden hat,
- Extraktionsmittel zum Extrahieren wenigstens eines Objekts aus dem Vorgang,
- eine Datei zum Speichern des Objekts,
- wobei die Datei dazu ausgelegt ist, ein Zugriffskommando von der Zielanwendung (530) zu empfangen und Objekte aus der Datei bereitzustellen.

15. Vorrichtung nach Anspruch 14, wobei ein oder mehrere Objekte aus der Datei ausgewählt werden, damit die Zielanwendung (530) darauf zugreifen kann.

16. Vorrichtung nach Anspruch 14, wobei die Datei eine Protokolldatei ist.

17. Vorrichtung nach Anspruch 14, die außerdem Mittel für wenigstens einen der folgenden Vorgänge umfasst: Nachrichtenübermittlung, Anrufen, Bilddarstellung, Browsen, Benutzen von Anwendungsprogrammen und Auswählen.

18. Vorrichtung nach Anspruch 14, wobei die Extraktionsmittel dazu konfiguriert sind, das Objekt aus einem Inhalt des Vorgangs oder aus einer Eigenschaft des Vorgangs auszuwählen.

19. Vorrichtung nach Anspruch 14, wobei die Quellanwendung (510) und die Zielanwendung (530) innerhalb eines Anwendungsprogramms angeordnet sind.

20. Vorrichtung nach Anspruch 14, wobei die Quellanwendung (510) und die Zielanwendung (530) innerhalb unterschiedlicher Anwendungsprogramme angeordnet sind.

21. Vorrichtung nach Anspruch 14, die Mittel zum Austauschen von Daten mit anderen Vorrichtungen umfasst.

22. Vorrichtung nach Anspruch 14, die ferner Mittel zum Identifizieren eines Typs des Objekts umfasst.

23. Vorrichtung nach Anspruch 22, die ferner Mittel zum Klassifizieren des Objekts aufgrund seines Typs umfasst.

24. Vorrichtung nach Anspruch 14, wobei der Vorgang ohne eine Handlung des Benutzers implementiert wird.

25. Vorrichtung nach Anspruch 14, die ferner Mittel zum manuellen Kopieren umfasst.

26. Vorrichtung nach Anspruch 15, die ferner Mittel zur mobilen Kommunikation umfasst.

27. System zum Implementieren des Verfahrens nach Anspruch 1.

28. Computerprogrammprodukt, umfassend Speichermittel und ein Computerprogramm, das Befehle umfasst zum
- automatischen Verfolgen des letzten Vorgangs in Bezug auf eine Anwendung (510), unmittelbar, nachdem der Vorgang stattgefunden hat,
- Extrahieren wenigstens eines Objekts aus dem Vorgang,
- Aufzeichnen des Objekts in einer Datei,
- wobei die Datei von einer anderen Anwendung (530) aufgerufen wird, um das einzufügende Objekt auszuwählen.

## Revendications

1. Procédé pour transférer des données à partir d'une application source (510) vers une application cible (530), le procédé comprenant des étapes pour
- tracer la dernière opération se rapportant à l'application source (510) automatiquement juste après que ladite opération s'est produite,
- extraire au moins un élément à partir de ladite opération,
- enregistrer ledit élément dans un fichier,
- dans lequel ledit fichier est appelé par l'application cible (530) pour sélectionner et coller l'élément vers ladite application cible (530).

2. Procédé selon la revendication 1, dans lequel l'élément est sélectionné à partir du fichier par le biais d'un presse-papiers.

3. Procédé selon la revendication 1, dans lequel plus d'une seule opération sont tracées et enregistrées.

4. Procédé selon la revendication 1, dans lequel le fichier est un fichier journal.

5. Procédé selon la revendication 1, dans lequel au moins l'une des opérations suivantes : manipulation, réception, envoi, téléchargement, création, suppression, est tracée.

6. Procédé selon la revendication 1, dans lequel ledit élément est un contenu de l'opération ou une propriété de l'opération.

7. Procédé selon la revendication 1, dans lequel l'application source (510) et l'application cible (530) sont situées dans un seul programme d'applications.

8. Procédé selon la revendication 1, dans lequel l'application source (510) et l'application cible (530) sont situées dans des programmes d'applications différents.

9. Procédé selon la revendication 1, dans lequel l'application source (510) et l'application cible (530) sont situées dans des dispositifs différents.

10. Procédé selon la revendication 1, dans lequel ledit fichier est partagé entre des programmes d'applications d'un dispositif informatique.

11. Procédé selon la revendication 1, dans lequel un type de l'élément est identifié.

12. Procédé selon la revendication 11, dans lequel ledit type appartient à l'un des groupes suivants : image, audio, vidéo, texte, URL, entrée d'annuaire téléphonique, musique, évènement de calendrier, portefeuille et message d'erreur.

13. Procédé selon la revendication 11, dans lequel ledit type est utilisé pour classer l'élément.

14. Dispositif pour informatiser, ledit dispositif comprenant une application source (510), une application cible (530) et
- un moyen de traçage (520) pour tracer la dernière opération se rapportant à l'application source (510) automatiquement juste après que ladite opération s'est produite,
- des moyens d'extraction pour extraire au moins un élément à partir de ladite opération,
- un fichier pour stocker ledit élément,
- ledit fichier est agencé pour recevoir une commande d'accès à partir de l'application cible (530) et pour présenter des éléments à partir du fichier.

15. Dispositif selon la revendication 14, dans lequel un ou plusieurs éléments à partir du fichier est sélectionné pour que l'application cible (530) y accède.

16. Dispositif selon la revendication 14, dans lequel le fichier est un fichier journal.

17. Dispositif selon la revendication 14 comprenant également un moyen pour au moins l'une des opérations suivantes : messagerie, appel, imagerie, navigation, utilisation de programmes d'applications et sélection.

18. Dispositif selon la revendication 14, dans lequel lesdits moyens d'extraction sont configurés pour extraire l'élément à partir d'un contenu de l'opération ou à partir d'une propriété de l'opération.

19. Dispositif selon la revendication 14, dans lequel l'application source (510) et l'application cible (530) sont situées dans un seul programme d'applications.

20. Dispositif selon la revendication 14, dans lequel l'application source (510) et l'application cible (530) sont situées dans des programmes d'applications différents.

21. Dispositif selon la revendication 14, comprenant un moyen pour échanger des données avec un autre dispositif.

22. Dispositif selon la revendication 14, comprenant en plus un moyen pour identifier un type de l'élément.

23. Dispositif selon la revendication 22, comprenant en plus un moyen pour classer l'élément sur la base de son type.

24. Dispositif selon la revendication 14, dans lequel ladite opération est mise en oeuvre sans une action par un utilisateur.

25. Dispositif selon la revendication 14, comprenant en plus un moyen pour effectuer une copie manuellement.

26. Dispositif selon la revendication 15, comprenant en plus un moyen pour une communication mobile.

27. Système pour mettre en oeuvre le procédé de la revendication 1.

28. Produit de programme informatique, comprenant un moyen de mémoire et un programme informatique comprenant des instructions pour
- tracer la dernière opération se rapportant à une application (510) automatiquement juste après que ladite opération s'est produite,
- extraire au moins un élément à partir de ladite opération,
- enregistrer ledit élément dans un fichier,
- ledit fichier étant appelé par une autre application (530) pour sélectionner l'élément à coller.
